# EUROPEAN PATENT APPLICATION

(11) **EP 0 766 188 A1**
(43) Date of publication of application: **02.04.1997**
(21) Application number: 95830400.8
(22) Date of filing: 28.09.1995
(51) Int. Cl.: G06K 7/00, G06K 19/06, G07F 7/06

(54) **Bar code, a plastic cup bearing the bar code and a recognition device of the plastic cup**

(71) Applicant: C.M.S. S.p.A., I-41054 Marano Sul Panaro, Modena (IT)
(72) Inventor: Salda, Luciano, I-41058 Vignola (Modena) (IT)
(74) Representative: Grünecker, Kinkeldey, Stockmair & Schwanhäusser Anwaltssozietät

(57) **Abstract**

A bar code (1) comprises a plurality of adjacent and parallel bars readable by a scanning head moving in a perpendicular direction thereto. The bar code is printed or otherwise impressed on a lateral surface (6) of the cup (2) in such a way that each bar of the bar code extends circumferentially by 360 degrees in a parallel direction to a bottom (5) of the cup. The bars are either of a narrow type or a wide type. The bar code is formed by a combination of digits in which each digit comprises six bars, of which four are of the narrow type and two of the wide type. The invention is especially utilizable in machines for collecting used plastic cups which return a deposit upon acceptance of a correct type of cup.

## Description

The invention relates to a bar code, a plastic cup bearing the bar code and a device for recognising the plastic cup.

Specifically, but not exclusively, the code is usefully employed in collection machines of used plastic cups.

These machines are generally used in conjunction with drinks dispensers wherein the cup is issued upon deposit of a sum of money. After the drink has been consumed, the cup is introduced into the collection machine in exchange for the coin deposit, which latter is issued upon recognition of the cup by the machine; in this way a tidy disposal system for throwaway empty cups is provided, with obvious benefits for the environment.

The return money, usually a coin, is of a higher value than that of the cup itself, so the system is open to abuse; rascally fellows might attempt to input cups not originating from the dispensing machine conjoined to the cup collector, but other similar containers, in the hope of obtaining return deposit coins.

To obviate this drawback, indentification codes have been printed on the cups, and an identification device therefor provided on the collection machine. This known system, for example described in PCT application no. WO 93/03461, presents some drawbacks.

Firstly, the recognition device of the cup is constructionally complex and expensive.

Secondly, the codes in present use take up much space on the cups while at the same time providing little information, unless considerable investment is made in the use of complicated and sophisticated codes and code-reading devices. An obvious consequence of this is that little space remains on the cup for other writings, such as for example publicity slogans.

A further consequence is that only a small number of different code bar combinations can be printed on the cups.

One of the aims of the present invention is to obviate the above-mentioned drawbacks and limitations in the prior art by providing a new bar code conception which is both legible by relatively simple and inexpensive machines but which can provide a considerable amount of information within a small space.

A further aim of the invention is to provide a cup bearing the bar code which can be manufactured cheaply but wherein the bar code is easily legible by an inexpensive recognition device.

A further aim of the invention is to provide a recognition device of the cup which is economical and constructionally simple.

An advantage of the invention is that a large amount of information can be reproduced on the cup.

Thanks to the invention each dispensing machine distributor company can be provided with a personalized and unique combination identifying only that company. The cups used by the dispensing machines of that company will bear that code alone.

All of the above measures provide a deterrent against improper use of the machines, which reimburse a consumer with a coin previously left as deposit; any ill-intentioned miscreant would surely meet with disappointment as he would have to violate a code containing a very elevated number of combinations.

Further, the invention provides an almost-watertight guarantee to the machine distributor company that the consumer reimbursed had in fact imbibed a beverage from that company's dispenser.

A still further advantage of the invention is represented by the fact that the cup can be identified independently of the angle it assumes when placed before the recognition device; no special rotation of the cup is necessary before it can be satisfactorily read.

These aims and others besides are all attained by the code, the cup and the device of the invention, as characterized in the claims that follow.

Further characteristics and advantages of the present invention will better emerge from the detailed description that follows, of some preferred embodiments of the invention, illustrated in the form of non-limiting examples in the accompanying drawings, in which:
figure 1 is a lateral view in vertical elevation of a first embodiment of the cup of the invention;
figure 2 is an enlarged scale of a detail of figure 1;
figure 3 is a lateral view in vertical elevation of a second embodiment of the cup;
figures 4 and 5 are two views from below of a third and a fourth embodiment of the cup;
figure 6 schematically shows two different embodiments in lateral view in vertical elevation, of the device of the invention, applied to the cup of figure 1.

There follows a table representing a preferred decoder key for the bar code of the invention.

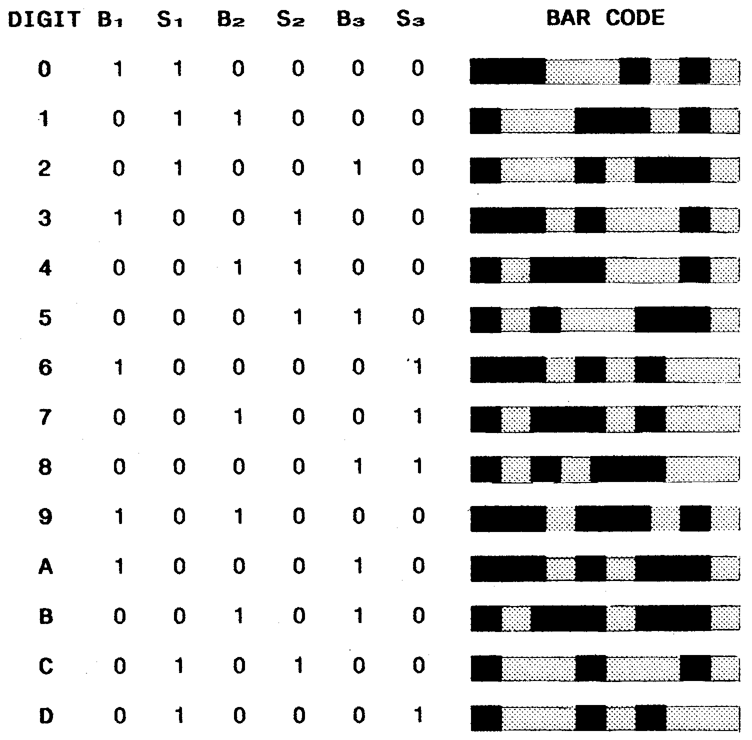

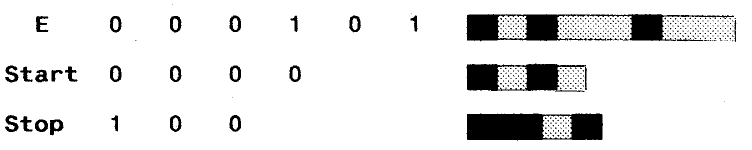

With reference to the table, the first column on the left refers to the fifteen digits making up the bar code. These digits have been indicated by arabic numbers, from 0 to 9, and with the first five capital letters of the alphabet, from A to E.

The final two elements at the bottom of the column refer to a code start digit and a code stop digit.

The bar code comprises an alternated succession of parallel and adjacent bars provided with different characteristics which can be picked up by a scanning head. The scanning head can be of the type which scans perpendicularly to the bar directions.

Preferably the bars consist (as in the present example) of dark bars (denoted by 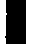 ) alternated with spaces, hereinafter referred to as light bars (denoted by 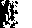 ). The recognition device is thus able to recognise different reflections of light off dark or light bars.

Each of the fifteen digits of the bar code comprises six bars, three dark alternated with three light.

In the above table the six columns from the second to the seventh columns refer to the six bars making up each digit. In particular the second column refers to the first dark bar (B₁) of each digit, the third column to the first light bar (S₁), the fourth to the second dark bar (B₂) and so on.

According to the invention, the bars (light and dark) exhibit two different breadths.

Substantially the code comprises two types of bar; wide and narrow. Preferably the printing rapport between a wide bar and a narrow bar is comprised between two and three. Experiments have proven that a rapport of 2.5 is an excellent compromise considering the need to have an easily-readable code within a contained space.

In the table, 1 denotes a wide bar (light or dark) and 0 a narrow bar.

Each digit of the code comprises a combination of two wide bars and four narrow bars, thus allowing the fifteen different digits of the table to be obtained. Each digit is constituted by one of the possible combinations of six bars, two wide and four narrow.

Each line of the table represents a digit of the bar code. On the right of the table the various groups of six bars are shown, each of which corresponds to a digit from 0 to E of the code, and at the bottom on the right the groups of bars corresponding to the initial digit and the final digit are shown.

A combination of the code comprises: the start code digit; a succession of digits obtained by combining the fifteen digits from 0 to E, possibly a control digit and finally the end digit of the code.

A decimal number can be encoded with the code, by operating (in a known way) a conversion of the number from base 10 to base 15. For example, the decimal number 12563 corresponds to the combination 3AC8 of the code.

Thus, thanks to the code of the invention, the number of digits printed can be reduced, with a resulting reduction in space required for the bar code, without compromising the number of possible combinations.

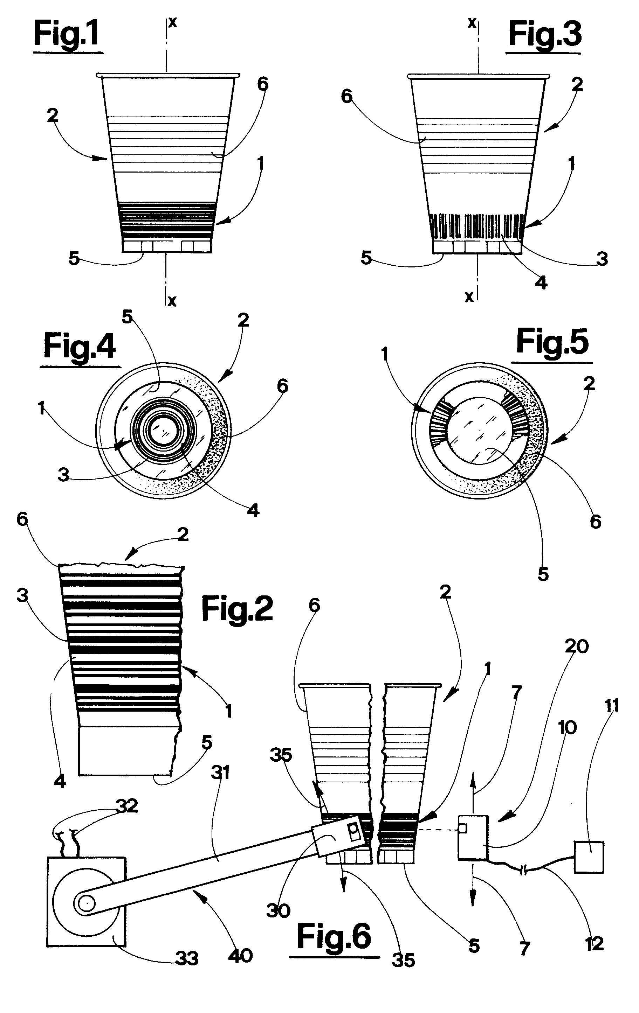

With reference to figure 1, 2 denotes a usually plastic or paper cup provided with a lateral surface 6 and a bottom 5. The cup 2 bears externally on the lateral surface 6 one of the possible combinations of a bar code constituted preferably but not necessarily by the bar code of the invention. 1 denotes in its entirety the print of the bar code combination: 3 denotes the dark bars and 4 the light bars thereof.

The bar code 1 is preferably printed on the cup with the bars arranged circumferentially in closed rings around the cup 1, as shown in figure 1. Each bar is thus parallel to the plane identified by the bottom 5 of the cup. This arrangement means that the code can be read off, for example, by a scanning head moving perpendicularly to the bottom 5 of the cup. Such scanning can be done at any position of the cup circumference as long as said circumference is normal to the axis of symmetry x of the cup bottom 5. It is therefore not necessary to rotate the cup about said axis of symmetry x in order that the scanning head can read off the code.

Preferably the bar code is read off from bottom to top. The bar code would be printed starting from a position about 6mm from the bottom 5 of the cup.

In figure 2 a cup is illustrated which bears a combination of the code comprising four digits from the above table as well as a start and stop digit.

The narrow bar, which should be considered a modular size for all bars, is about four tenths of a millimetre wide, while the wide bar is about a millimetre wide. Tolerances are in the range of about a tenth of a millimetre.

The space occupied by the code on the cup of figure 1 is constituted by a circumferential band about 3.6 millimetres wide for each digit plus about 3.4 millimetres wide for the start and stop code digits.

In a code with four digits (figure 2) the total space occupied is a band about 17.8mm wide in which 15⁴ = 50625 different code combinations can be inserted, thus obtaining a high information density.

Figure 3 shows a second version of the cup of the invention, in which the bars 3 and 4 of the code extend in a normal direction to the bottom 5 of the cup 2. Reading off of the code is therefore performed in a circumferential direction, so that the cup 2 must be rotated with respect to the scanning head. In this case two or more codes can be printed along the external surface of the cup 2, said codes being situated equidistantly to facilitate reading thereof. This is especially useful in cases where the lateral surface of the cup bearing the code is dirty or broken.

The cup of figure 3 also exhibits a lateral surface 6 having a large empty space, on which writing, such as a publicity manifestation, can be printed.

Figure 4 shows a third embodiment of the cup, in which the code is printed on the bottom 5 of the cup 2. In this embodiment the bars 3 and 4 are printed as concentric rings and the code is read by means of a relative movement between the scanning head and the cup according to a radial direction with respect to axis x of the cup 2, i.e. normal with respect to the bars.

The cup 2 of figure 4 has the whole lateral surface 6 of the cup 2 free for printing of words or figures and is simply and quickly identifiable by means of a scanning of the bottom 5 of the cup in a radial direction. There is no need with this embodiment to rotate the cup with respect to the scanning head.

The cup 2 of figure 5 exhibits a plurality of side-by-side combinations of the printed code on the bottom 5. The bars 3 and 4 extend radially and are arranged one by the side of another in a circumferential direction.

With reference to the right side of figure 6, 20 denotes in its entirety a recognition device of the cup 2, provided with a scanning head 10 for reading the bar code printed on a cup 2 - the cup 2 in this case being as of the embodiment of figure 1. The scanning head 10 is preferably, but not necessarily, an infrared scanning head 10, and is mobile on command in the vertical direction indicated by the arrows 7, and directly faces the code printed on a cup 2 (in an upright position, with the lip upwards) housed in a seating (of a known type and not illustrated). The scanning head 10 is moved by known means, not illustrated. 11 schematically denotes a central unit, for example a microprocessor, connected by cables 12 to the scanning head 10; the microprocessor receives and decodes the signals arriving from the scanning head 10.

The device 20 of figure 6 is preferably used in collection machines of used plastic or paper cups.

The used cups are introduced into the machine through an entrance having its aperture facing upwards. The cup 2 is thus introduced and the scanning head 10 scans and reads off, bottom-to top, the code on the cup 2. The angle of the cup 2 about the axis x is unimportant, as the code is printed all around the cup circumference.

The machine is provided with means which, if the scanning head 10 identifies and accepts the cup 2, transport the cup 2 into an internal container in the machine; the machine is also provided with a deposit return dispenser which produces a coin on having accepted a cup.

With reference to the left part of figure 6, 40 denotes a second version of a recognition device according to the invention. 30 denotes a scanning head, advantageously an infrared scanning head 30, which is mounted on an end of a rod 31. The opposite end of the rod 31 is connected to an electric motor 33 which on receiving a command rotates the rod 31 about a rotation axis normal to the rod 31 in both directions, as indicated by arrows 35.

Cables 32 are provided for connecting the scanning head 30 to a central signal reception and decoding unit, not illustrated. The cup 2, illustrated with its opening upwards-facing, is as in the embodiment of figure 1. The scanning head 30 is mobile on a vertical plane directly facing the code on the cup 2.

The recognition device 40 is utilized in a used-cup collection machine of the above-mentioned type. The cup is inserted into the machine, after which the motor 33 is commanded to rotate the scanning head 30 which takes a first reading of the code (from bottom to top) and a second as it returns downwards (and therefore top to bottom).

The invention makes possible the printing of a large amount of information on the cup, among which, for example, could be included the owner of the dispenser machine the cup has been dispensed from, the shape and size of the cup, the type (single-use or re-usable), the material the cup is made of, so that among other things cups of different types can be stacked separately in separate containers inside the machine.

Finally, this ability to accept, simply and economically, cups of various sizes and shapes is a further advantage of the invention.

## Claims

1. A bar code comprising a plurality of parallel and adjacent bars (3, 4) which can be read by a scanning head, characterized in that:
said bars are of two types, a wide type and a narrow type, each of which types is distinguished by a different bar width;
the bar code is formed by a combination of different digits each composed of a group of six bars, of which four are of the narrow type and two of the wide type.

2. A bar code as in claim 1, characterized in that a rapport between the wide type of bar and the narrow type of bar is comprised between two and three.

3. A bar code as in claim 1 or 2, characterized in that the digits are as follows, where 1 denotes the wide type of bar and 0 indicates the narrow type of bar: 0 = 110000, 1 = 011000, 2 = 010010, 3 = 100100, 4 = 001100, 5 = 000110, 6 = 100001, 7 = 001001, 8 = 000011, 9 = 101000, A = 100010, B = 001010, C = 010100, D = 010001, E = 000101.

4. A cup, characterized in that it exhibits, printed on an external lateral surface thereof, one of the combinations of the bar code of the preceding claims.

5. A cup as in claim 4, characterized in that each bar (3, 4) of the bar code is arranged on the external lateral surface (6) of the cup (2), and extends circumferentially over 360 degrees in a parallel direction to a bottom (5) of the cup (2).

6. A cup as in claim 4, characterized in that each bar (3, 4) of the bar code is arranged on the external lateral surface (6) of the cup (2) and extends in a normal direction to the bottom (5) of the cup (2).

7. A cup as in claim 4, characterized in that the bars (3, 4) of the bar code are arranged concentrically on a bottom (5) of the cup (2).

8. A recognition device of the cup (2) of the preceding claims, characterized in that it comprises:
a seating for the cup (2);
a scanning head (10, 30) for reading the bar code (1) on the cup (2) when the cup (2) is housed in the seating, and connected to a receiving and decoding unit (11) of the bar code.

9. A recognition device as in claim 8, characterized in that it comprises means for moving the scanning head (10, 30) in order that said scanning head (10, 30) can scan the bar code (1) on the cup (2) housed in said seating.

10. A machine for collecting used cups, characterized in that it comprises:
an entrance for the cups (2);
the recognition device (20, 40) of the cups as in claim 8 or 9;
a container of cups identified and accepted by the recognition device (20, 40);
a deposit return dispenser.
